# EUROPÄISCHE PATENTSCHRIFT

(11) **EP 4 118 356 B1**
(45) Veröffentlichungstag und Bekanntmachung des Hinweises auf die Patenterteilung: **05.11.2025**
(21) Anmeldenummer: 21711215.0
(22) Anmeldetag: 09.03.2021
(51) Int. Cl.: F16D 65/097

(54) **BELAGTRÄGERPLATTE FÜR EINE SCHEIBENBREMSE EINES KRAFTFAHRZEUGS SOWIE VERFAHREN ZUR DEREN HERSTELLUNG**
BACKING PLATE FOR A DISK BRAKE OF A MOTOR VEHICLE AND METHOD FOR MANUFACTURING SAID BACKING PLATE
PLATEAU DE FREIN POUR UN FREIN À DISQUE D'UN VÉHICULE AUTOMOBILE ET PROCÉDÉ DE FABRICATION DUDIT PLATEAU DE FREIN

(30) Priorität: 09.03.2020 DE 102020106296
(43) Veröffentlichungstag der Anmeldung: 18.01.2023
(73) Patentinhaber: TMD Friction Services GmbH, 51381 Leverkusen (DE)
(72) Erfinder: BERGHAUS, Frank, 51515 Kürten (DE); SCHNEIDER, Dirk, 51519 Odenthal (DE)
(74) Vertreter: Weckenbrock, Matthias
(86) Internationale Anmeldenummer: PCT/EP2021/055860
(87) Internationale Veröffentlichungsnummer: WO 2021/180686

(56) Entgegenhaltungen:
- EP-A1- 0 731 288
- DE-A1- 10 159 328
- DE-A1- 19 507 916
- DE-A1- 3 220 632
- US-A- 5 494 140
- US-A1- 2007 170 018

## Beschreibung

Die Erfindung betrifft Belagträgerplatte für eine Scheibenbremse eines Kraftfahrzeugs nach dem Oberbegriff des Patentanspruchs 1. Ferner betrifft die Erfindung Verfahren zur Herstellung einer solchen Belagträgerplatte gemäß dem Oberbegriff des Anspruches 10.

Belagträgerplatten für Scheibenbremsen eines Kraftfahrzeugs nach dem Oberbegriff des Patentanspruchs 1 sind in vielfältiger Weise bekannt. Belagträgerplatten werden in derartigen Scheibenbremsvorrichtungen in einem Schacht des Bremssattels beziehungsweise des Bremsenträgers geführt und darin abgestützt. Die Belagträgerplatte ist zur Aufnahme eines durch einen Bremszylinder übertragenen Bremsdrucks ausgebildet, um diesen auf die Bremsscheibe weiter zu übertragen. Damit die Belagträgerplatte sicher in dem Schacht des Bremssattels beziehungsweise des Bremsträgers gehalten ist, sind Niederhaltefedern vorgesehen, die oftmals auf der Oberseite der Belagträgerplatte angreifen und mittels einer Niederhalteeinrichtung radial gegen die Belagträgerplatte und tangential gegen die Belagträgerplatte vorgespannt werden. Belagträgerplatten mit derartige Niederhaltefedern sind beispielsweise in der DE 10 2013 008 155 A1 gezeigt. Eine Drahtfeder für eine Bremsbackenanordnung in einer Schwimmsattel-Bremse ist aus der DE 10 351 477 B4 bekannt. Die dortige Drahtfeder ist über ihre kreisförmigen Windungen in einer Ausnehmung einer Belagträgerplatte für die Bremsbacke gelagert, um ein Klappern der Bremsbacken an den Führungen in der Bremsbackenanordnung zu verhindern.

Aus der US 5 494 140 A ist eine Bremsbacke mit einer Rückenplatte bekannt, deren Vorderseite mit einem Reibbelag und deren Rückseite mit einem Dämmlack versehen ist. Die Rückenplatte weist in ihrer Mitte eine aus ihrer Ebene hervorstehende Durchstellung auf, mittels derer eine Haltefeder befestigt ist.

Aus der DE 101 59 328 A1 geht eine Schwimmsattelscheibenbremse mit einer mehrteiligen Federanordnung hervor, welche ein Federelement sowie ein am äußeren Bremsbelag befestigtes Halteelement aufweist.

Die US 2007/17018 A1 betrifft ein Scheibenbremssystem mit einem Bremsbelag, der innerhalb des Systems unter Verwendung eines Federclips gehalten werden soll. Der Bremsbelag ist durch die Federklemme am Kolben festgeklemmt.

Die DE 32 20 632 A1 betrifft eine Bremsbackenanordnung mit einer als Bremsbackenfeder ausgebildeten Drahtfeder.

Aus der EP 0 731 288 A1 ist ein Verfahren zur Herstellung eines Bremsbelags, sowie einer Trägerplatte für einen Bremsbelag bekannt. Bei diesem Verfahren zur Herstellung des Bremsbelages durch Ausbildung von Vorsprüngen mit Hinterschneidungen auf der Trägerplatte und durch Aufpressen eines Reibbelages auf die Trägerplatte ist vorgesehen, dass in einem ersten Schritt in einem Umformvorgang Teile der Trägerplatte zu noppenartigen, in Richtung auf den Reibbelag vorstehenden Vorsprüngen durchgedrückt werden, und dass in einem zweiten Schritt in Gegenrichtung zum Umformvorgang des ersten Schrittes die noppenartigen Vorsprünge aufgespalten und umgeformt werden, wodurch Hinterschneidungen gebildet werden.

Es ist Aufgabe der Erfindung, eine Belagträgerplatte nach dem Oberbegriff des Patentanspruchs 1 zur Verfügung zu stellen, bei der eine alternative Anordnung des Federelementes gegeben ist, wobei der logistische Aufwand zur Vorhaltung der benötigten Teile minimiert ist und auch das Anbringen des Federelementes an der Belagträgerplatte vereinfacht ist. Ferner ist es Aufgabe der Erfindung, ein Verfahren zur Herstellung einer Belagträgerplatte nach dem Oberbegriff des Patentanspruchs 1 zur Verfügung zu stellen.

Vorrichtungsgemäß wird die Aufgabe gelöst durch eine Belagträgerplatte mit den Merkmalen des Patentanspruchs 1. Hinsichtlich des Verfahrens zur Herstellung einer derartigen Belagträgerplatte wird die Aufgabe durch ein Verfahren mit den Merkmalen des Patentanspruchs 10 gelöst. Vorteilhafte Ausgestaltungen der Erfindung finden sich in den Unteransprüchen.

Die erfindungsgemäße Belagträgerplatte für eine Scheibenbremse eines Kraftfahrzeugs, insbesondere eines Nutzfahrzeugs, weist dabei eine Vorderseite auf, welche zur Aufnahme eines Reibbelags ausgebildet ist. Die erfindungsgemäße Belagträgerplatte zeichnet sich dadurch aus, dass die Belagträgerplatte eine Rückseite aufweist, auf welcher eine Aufnahmeeinrichtung angeordnet ist, die zur Aufnahme eines aus einer Federbasis und zwei an den Enden der Federbasis angeordneten Federschenkeln bestehenden Federelementes ausgebildet ist. Das Federelement kann als Drahtfeder ausgebildet sein. Dabei ist die Aufnahmeeinrichtung auf der Rückseite der Belagträgerplatte stoffschlüssig mit dieser ausgebildet. Insbesondere ist im Sinne der Erfindung auch eine erfindungsgemäße Belagträgerplatte mit einem solchen Federelement beanspruchbar.

Besonders vorteilhaft bei der erfindungsgemäßen Belagträgerplatte ist daher, dass die Aufnahmeeinrichtung zur Aufnahme des Federelementes integraler Bestandteil der Belagträgerplatte ist und bereits bei der Herstellung der Belagträgerplatte mit dieser hergestellt wird. Somit ist die Aufnahmeeinrichtung unverlierbar an der Belagträgerplatte gehalten. Es müssen daher keine einzelnen Elemente, wie beispielsweise Schrauben oder Halteklipps, vorgehalten werden, damit auf der Rückseite der Belagträgerplatte eine Aufnahmeeinrichtung für ein Federelement angeordnet werden kann. Hierdurch entfallen logistische Aufwendungen zur Beschaffung und Lagerung dieser Einzelteile. Zudem entfällt auch der Bearbeitungsschritt des Fügens dieser Einzelteile mit der Belagträgerplatte auf deren Rückseite. Im Gegensatz zu Belagträgerplatten, bei denen nachträglich eine Aufnahmeeinrichtung für ein Federelement auf deren Rückseite mittels eines einzuschraubenden Halteclips oder dergleichen angebracht werden kann, entfällt auch der Bearbeitungsschritt des Einbringens der Gewinde für die Schrauben in die Rückseite der Belagträgerplatte. Insgesamt lassen sich durch die Erfindung die Herstellungskosten für die Belagträgerplatte mit Aufnahmeeinrichtung für die Federelemente erheblich reduzieren.

Durch die erfindungsgemäße Belagträgerplatte kann somit der logistische Aufwand und auch der energetische Aufwand zur Anordnung einer Aufnahmeeinrichtung für ein Federelement auf der Rückseite einer Belagträgerplatte minimiert werden. Hierdurch ist sowohl die ökonomische als auch die ökologische Bilanz der erfindungsgemäßen Belagträgerplatte gegenüber den aus dem Stand der Technik bekannten Belagträgerplatten nach dem Oberbegriff des Patentanspruchs 1 deutlich verbessert.

Erfindungsgemäß weist die Aufnahmeeinrichtung auf der Rückseite der Belagträgerplatte jeweils wenigstens ein Abstützelement für die Federbasis und jeden der beiden Federschenkel auf. Durch diese Ausgestaltung der Erfindung ist erreicht, dass die Feder im Betrieb der Belagträgerplatte in einer Bremsanlage sicher im Schacht des Bremssattels beziehungsweise des Bremsenträgers gehalten ist, wobei die Abstützelemente das Federelement unter Belastung derart abstützen, dass das Federelement die gewünschte Federfunktion innerhalb der Bremsanlage, insbesondere als Niederhaltefeder, erfüllen kann.

Alternativ kann auch nur ein Abstützelement für beide Federschenkel und/oder die Federbasis vorgesehen sein. Das Abstützelement kann als Vorsprung mit zumindest einer Durchgangsöffnung oder Ausnehmung, ähnlich einem Haltegriff oder einer Tasche, ausgebildet sein. Das Abstützelement kann zwei Durchgangsöffnungen, insbesondere Bohrungen, zum Einführen der Federschenkel aufweisen.

Die Aufnahmeeinrichtung kann nur ein Abstützelement für die Federbasis und/oder nur ein Abstützelement für einen Federschenkel aufweisen. Diese reduzierte Aufnahmeeinrichtung weist gemäß einer vorteilhaften Ausgestaltung eines oder mehrere der nachbeschriebenen Abstütz- und Führungselemente zur Stabilisierung der zugeordneten Feder auf.

In einer vorteilhaften Weiterbildung der Erfindung ist es vorgesehen, dass wenigstens eines der Abstützelemente in Bezug zur Rückseite der Belagträgerplatte einen Hinterschnitt zur Aufnahme der Federbasis oder eines Federschenkels des Federelementes ausgebildet ist. Derartige Hinterschnitte verbessern noch einmal die Abstützwirkung und die unverlierbare Positionierung des Federelementes innerhalb der Aufnahmeeinrichtung, da die einzelnen Elemente des Federelementes, insbesondere die Federschenkel und die Federbasis durch solche Hinterschnitte mehrseitig umgriffen sind. Hierdurch ist eine Verliersicherung einer in die Aufnahmeeinrichtung eingelegten Feder optimiert. Derartige Hinterschnitte können dabei unterschiedlich ausgebildet sein. Zum Beispiel ist es denkbar, dass in einer besonders voreilhaften Ausgestaltung die Abstützelemente einen senkrecht auf der Belagträgerplatte angeordneten Bereich aufweisen, an dem sich ein winkliger, insbesondere rechtwinkliger Bereich des Abstützelementes anschließt, der in einem Winkel kleiner 90° zur Rückseite der Belagträgerplatte, insbesondere parallel zur Rückseite der Belagträgerplatte angeordnet ist. Eine weitere Möglichkeit der Ausbildung von derartigen Hinterschnitten besteht darin, dass die Abstützelemente für die Federbasis beziehungsweise die Federschenkel derart ausgebildet sind, dass sie in dem Bereich, in dem das Federelement sich an ihnen abstützt, eine spitzwinklige Fläche im Bezug zur Rückseite der Belagträgerplatte aufweisen. Die hier beschriebenen Hinterschnitte sind besonders gut geeignet, das Federelement innerhalb der Aufnahmeeinrichtung für das Federelement verliersicher zu halten. Grundsätzlich können die Hinterschnitte derart ausgebildet sein, dass sie dem Profil des Federelementes angepasst sind. Insbesondere können diese Hinterschnitte bei im Querschnitt kreisrunden Federelementen entsprechende kreissegmentförmige Abstützflächen für das Federelement aufweisen.

In die gleiche Richtung zielt die Ausgestaltung der Erfindung, dass die Aufnahmeeinrichtung ein dem Abstützelement für die Federbasis zugeordnetes Sicherungselement aufweist. Durch dieses Sicherungselement ist zwischen ihm und dem Abstützelement für die Federbasis ein Bereich gebildet, in welchem sich das eingelegte Federelement verliersicher aufnehmen lässt. Dies insbesondere, wenn die Abstützelemente der Federschenkel die zuvor beschriebenen Hinterschnitte aufweisen. Hierdurch ist erreicht, dass ein Federelement verschiebe- und verliersicher in der Aufnahme für das Federelement auf Rückseite der Belagträgerplatte gehalten wird.

Nach einer weiteren vorteilhaften Ausgestaltung der Erfindung ist es vorgesehen, dass die Aufnahmeeinrichtung ein auf einer Mittellängsachse zwischen einer Belagträgeroberseite und den Abstützelementen der beiden Federschenkel angeordnetes, gemeinsames Abstütz- und Führungselement für die beiden Federschenkel aufweist. Dieses Abstützelement dient in erster Linie dafür, dass die Federschenkel bei Belastung, wenn die Belagträgerplatte in einen Schacht eines Bremssattels oder eines Bremsenträgers eingebaut ist, sich daran abstützen können. Zudem kann dieses Abstützelement beim Einlegen der Feder in die Aufnahmeeinrichtung auf der Rückseite der Belagträgerplatte als Führungselement dienen. Beim Einlegen kann die Feder nämlich derart durch dieses Abstützelement geführt werden, dass sich dieses gemeinsame Abstützelement der Federschenkel zwischen diesen befindet und das Federelement nun derart verschoben wird, dass es zwischen dem dem jeweiligen Federschenkel zugeordneten Abstützelement geführt wird. Zum Fixieren der Feder innerhalb der Aufnahmeeinrichtung dient dann das zuvor beschriebene, dem Abstützelement der Federbasis zugeordnete Sicherungselement, indem das Federelement mit seiner Federbasis über dieses Sicherungselement hinweg geschoben wird. Dabei kann vorgesehen sein, dass das dem Abstützelement für die Federbasis zugeordnete Sicherungselement mit einer Anlaufschrägen versehen ist, über welche das Federelement mit seiner Federbasis hinweg geschoben wird, damit die Federbasis dann sicher zwischen ihrem Abstützelement und dem Sicherungselement gehalten ist.

Alternativ oder ergänzend zum vorbeschriebenen gemeinsamen Abstütz- und Führungselement können weitere Elemente vorgesehen sein, die jeweils einem einzelnen Federschenkel zugeordnet sind. Diese weiteren Abstütz- und Führungselemente sind vorzugsweise nicht auf der Mittellängsachse zwischen der Belagträgeroberseite und den Abstützelementen der beiden Federschenkel angeordnet. Die Elemente können beispielsweise als Vorsprünge mit zylindrischem oder vieleckigem Querschnitt ausgebildet sein und optional auch Hinterschnitte aufweisen. Nach einer weiteren vorteilhaften Ausgestaltung der Erfindung ist es vorgesehen, dass die Federschenkel an ihren offenen Enden mit einem Abstützbereich versehen sind, mit dem sich das Federelement bei einer in einer Scheibenbremsanlage montierten Belagträgerplatte an einem Stützelement der Scheibenbremsanlage abstützt. Hierdurch ist ein Anlagebereich für die Scheibenbremsanlagen an dem Federelement gegeben, wobei diese Anlagebereiche des Federelementes an die Scheibenbremsanlage angepasst sind.

Von besonderem Vorteil ist zudem, dass die erfindungsgemäße Belagträgerplatte als Metallgussteil, bevorzugt als Gusseisenteil ausgebildet ist. Viele der derzeit verwendeten Belagträgerplatten werden nämlich als derartige Gusseisenteile hergestellt. Zur Herstellung der erfindungsgemäßen Belagträgerplatte ist es daher nicht notwendig, einen gänzlich neuen Herstellungsprozess für das Gussteil bereitzustellen. Es ist ausreichend, die Gussform für die Belagträgerplatte entsprechend anzupassen. Ansonsten kann das gesamte Herstellungsverfahren unverändert bleiben. Die Verwendung von verschiedenen Gussformen, die bei der Herstellung gegeneinander ausgetauscht werden, ist sowieso gegeben, da unterschiedliche Bremsanlagen unterschiedliche Belagträgerplatten benötigen.

Das erfindungsgemäße Verfahren zur Herstellung einer zuvor beschriebenen Belagträgerplatte, insbesondere aus Metallguss, weist folgende Verfahrensschritte auf:
a. Bereitstellen einer wenigstens zweigeteilten Negativform einer Belagträgerplatte, die eine Negativform für die Aufnahmeeinrichtung aufweist,
b. Bereitstellen einer Metallschmelze, insbesondere einer Gusseisenschmelze,
c. Schließen der wenigstens zweigeteilten Negativform der Belagträgerplatte
d. Befüllen der wenigstens zweigeteilten Negativform der Belagträgerplatte mit der Schmelze,
e. Zumindest Teilaushärten der Schmelze innerhalb der geschlossenen Negativform der Belagträgerplatte,
f. Öffnen der Negativform der Belagträgerplatte,
g. Entnahme der zumindest teilausgehärteten Belagträgerplatte.

Das erfindungsgemäße Verfahren zeichnet sich dadurch aus, dass die Negativform der Belagträgerplatte eine Negativform für die Aufnahmeeinrichtung aufweist. Durch diese Ausgestaltung der Erfindung wird die Aufnahmeeinrichtung bereits beim Gießen der Belagträgerplatte als integraler Bestandteil derselben hergestellt, ohne dass spätere Fügearbeitsschritte notwendig sind, um eine entsprechende Aufnahmeeinrichtung an der Rückseite der Belagträgerplatte zu montieren.

Um ein sicheres Positionieren des Federelementes innerhalb der Aufnahmeeinrichtung zu gewährleisten, ist es vorgesehen, dass wenigsten eines der Abstützelemente für die Federbasis und der beiden Federschenkel mit einem Hinterschnitt versehen wird. Derartige Hinterschnitte werden vorzugsweise durch Ausfräsen des wenigstens einen Abstützelementes erzeugt. Das Ausfräsen kann dabei der Art erfolgen, dass die Form der Hinterschnitte an die Form beziehungsweise das Profil oder den Querschnitt des Federelementes angepasst ist, sodass eine besonders gute Abstützwirkung des Federelementes innerhalb der Aufnahmeeinrichtung erzielt wird, wenn das Federelement im Betrieb belastet wird.

Nach einem weiteren vorteilhaften Verfahrensschritt kann es vorgesehen sein, dass das der Federbasis zugeordnet Sicherungselement und/oder das gemeinsame Abstützelement für die beiden Federschenkel nachgearbeitet wird. Insbesondere kann dabei bei dem der Federbasis zugeordneten Sicherungselement eine Anlaufschräge eingearbeitet werden, die beim Einlegen des Federelementes in die Aufnahmeeinrichtung ein sicheres Positionieren des Federelementes innerhalb der Aufnahmeeinrichtung erleichtert.

Zum sicheren Funktionieren der Belagträgerplatte samt Federelement innerhalb einer Bremsanlage ist abschließend vorgesehen, dass in die Aufnahmeeinrichtung das Federelement eingebracht wird.

Alternativ kann es auch vorgesehen sein, dass die Belagträgerplatte als Stahlplatte ausgebildet ist. Beispielsweise kann die Belagträgerplatte aus einem gewalzten Bandstahl ausgestanzt sein. Die Aufnahmeeinrichtung kann durch ein Durchstellverfahren, insbesondere durch ein Stanzverfahren, ausgeformt sein.

Gemäß einer vorteilhaften Weiterentwicklung weist die Aufnahmeeinrichtung auf der Rückseite der Belagträgerplatte noppenartige Vorsprünge als Abstützelemente, insbesondere zum Abstützen der Federschenkel, auf, welche auch als Noppen bezeichnet werden. Die Federschenkel liegen in Einbaulage vorzugsweise zumindest bereichsweise an den Noppen an.

Die Noppen können beispielsweise kreisförmig ausgebildet sein, aber auch andere Formen aufweisen. Die Noppen können beispielsweise halbreisförmig ausgebildet sein, wobei die Hinterschneidungen jeweils nur zur Mitte der Belagträgerplatte zeigen können.

Ein Verfahren zur Herstellung einer zuvor beschriebenen Belagträgerplatte aus Stahl mit rückseitigen Noppen kann umfassen, dass die Aufnahmeeinrichtung der Belagträgerplatte mit noppenartigen, durch Durchdrücken von Teilen der Belagträgerplatte zur Rückseite der Belagträgerplatte vorstehenden Vorsprüngen mit Hinterschneidungen als Abstützelemente ausgebildet wird, wobei die noppenartigen Vorsprünge in einem ersten Schritt in einem Umformvorgang ausgebildet werden, und dass die noppenartigen Vorsprünge in einem zweiten Schritt in Gegenrichtung zum Umformvorgang des ersten Schrittes aufgespalten und umgeformt werden, wodurch die Hinterschneidungen gebildet werden.

Ein gewalzter Bandstahl kann zur Herstellung der Belagträgerplatte verwendet werden. Die Belagträgerplatte bzw. die Kontur derselben kann beispielsweise aus dem Bandstahl ausgestanzt werden.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen.

Es zeigen:
- Figur 1: ein erstes Ausführungsbeispiel einer erfindungsgemäßen Belagträgerplatte in einer Draufsicht auf die Rückseite,
- Figur 2: die Belagträgerplatte der Figur 1, in welche ein Federelement eingesetzt wird,
- Figur 3: die Belagträgerplatte der Figur 1 mit abschließend positioniertem Federelement,
- Figur 4: eine Detailansicht der Aufnahmeeinrichtung der Belagträgerplatte der Figuren 1 bis 3 und
- Figur 5: eine weitere Detailansicht der Aufnahmeeinrichtung der Belagträgerplatte der Figuren 1 bis 3
- Figur 6:: ein zweites Ausführungsbeispiel einer erfindungsgemäßen Belagträgerplatte in einer Draufsicht auf die Rückseite,
- Figur 7: die Belagträgerplatte der Figur 6, in welche ein Federelement eingesetzt wird,
- Figur 8: die Belagträgerplatte der Figur 6 mit abschließend positioniertem Federelement,
- Fig. 9: eine dritte Ausführungsform gemäß Figuren 6 bis 8, jedoch ohne Abstützelement,
- Fig. 10: ein viertes Ausführungsbeispiel gemäß Figuren 1 bis 5, jedoch ohne Abstützelement,
- Fig. 11-13: ein fünftes Ausführungsbeispiel der Belagträgerplatte mit noppenartigen Vorsprüngen und Abstützelementen,
- Fig. 14: die Ausführungsform gemäß Figuren 11-13 als Schnittdarstellung durch die Schnittlinie gemäß Fig. 11,
- Fig. 15: ein sechstes Ausführungsbeispiel der Belagträgerplatte mit noppenartigen Vorsprüngen, jedoch ohne Abstützelemente,
- Fig. 16: die Ausführungsform gemäß Figur 15 als Schnittdarstellung und
- Fig. 17: die Ausführungsform gemäß Figuren 15 und 16 als ein vergrößerter Ausschnitt der Darstellung gemäß Fig. 16.

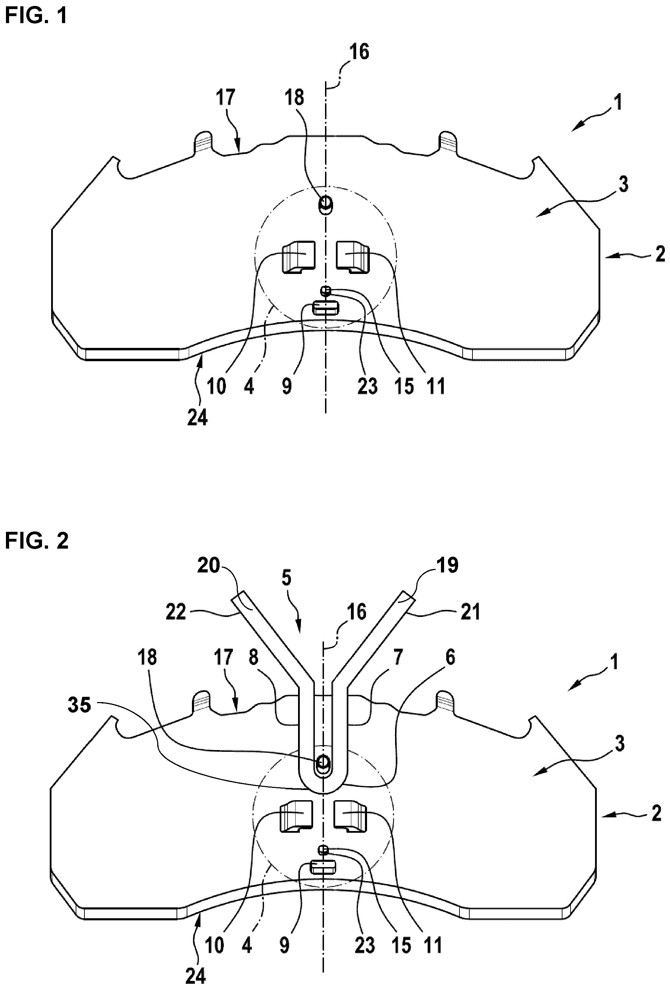

In der Figur 1 ist eine nach dem erfindungsgemäßen Verfahren hergestellte Belagträgerplatte 1 in einer Draufsicht auf die Rückseite gezeigt. Die Belagträgerplatte 1 weist dabei eine Vorderseite 2, auf welche ein Reibbelag aufgebracht werden kann, eine Rückseite 3, eine Belagträgerplattenoberseite 17 und eine Belagträgerplattenunterseite 24 auf. Auf der Rückseite 3 der Belagträgerplatte 1 ist eine Aufnahmeeinrichtung 4 für ein in Figur 1 nicht dargestelltes Federelement gezeigt. Das Aufnahmeelement 4 besteht aus einem Abstützelement 9 für eine Federbasis, zwei Abstützelementen 10 und 11 für jeweils einen Federschenkel, einem gemeinsamen Abstützelement 18 für die Federschenkel und einem Sicherungselement 15 für die Federbasis. Das Sicherungselement 15 weist zudem eine Anlaufschräge 23 auf, über welche die Federbasis beim Einbringen eines Federelementes hinausgeschoben wird, um zwischen dem Sicherungselement 15 und dem Abstützelement 9 zum Liegen zu kommen.

Das Federelement 5 kann als Drahtfeder ausgebildet sein, wie dies im vorliegenden Ausführungsbeispiel der Fall ist. Bei der vorliegenden Drahtfeder 5 ist die Federbasis 6 eine im Wesentlichen halbkreisförmige Windung. Hieran schließen sich die, insbesondere in der Aufnahmeeinrichtung 4 in etwa parallel zueinander verlaufenden Federschenkel 7, 8 an. Durch die halbkreisförmige Windung und die parallel verlaufenden Federschenke ist ein in etwa U-förmiger Abschnitt 35 des Federelements 5 bzw. der Drahtfeder gebildet. Die freien bzw. offenen Enden 19, 20 der Schenkel 7 und 8 sind zueinander zumindest abschnittsweise abgewinkelt, insbesondere erstrecken sich die freien Enden 19, 20 in Montagestellung nach außen. An den freien Enden 19, 20 sind zudem Abstützbereiche 21 und 22 vorgesehen, mit welchen das Federelement 5 beziehungsweise die Federschenkel im montierten Zustand beim Betrieb innerhalb einer Bremsanlage sich an dieser abstützen können, um somit die Federwirkung zu ermöglichen. Das Federelement 5 kann etwa mittig den Übergang vom U-förmigen Abschnitt 35 zum abgewinkelten Bereich der Schenkel 7, 8 aufweisen. Insbesondere kann die erfindungsgemäße Belagträgerplatte 1 ein solches Federelement 5, insbesondere eine Drahtfeder aufweisen.

Die Aufnahmeeinrichtung 4 ist in diesem Ausführungsbeispiel spiegelsymmetrisch zu einer Mittellängsachse 16 der Belagträgerplatte 1 ausgebildet. Dabei liegen sowohl das gemeinsame Abstützelement 18 für die Federschenkel als auch das Sicherungselement 15 und das Abstützelement 9 für die Federbasis spiegelsymmetrisch auf dieser Mittellängsachse 16, während die Abstützelemente 10 und 11 der jeweiligen Federschenkel spiegelsymmetrisch von der Mittellängsachse 16 beabstandet sind.

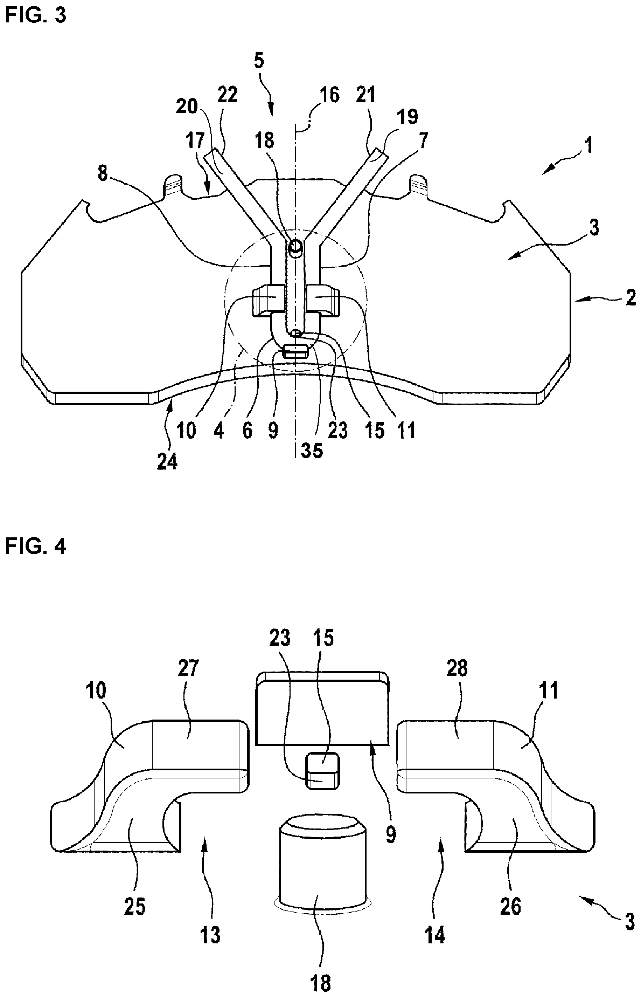

Eine Detaildarstellung der Aufnahmeeinrichtung 4 in einer perspektivischen Ansicht von der Belagträgerplattenoberseite 17 ist in Figur 4 dargestellt. Erkennbar ist hierbei, dass das Abstützelement 9 für die Federbasis auf der Rückseite 3 der Belagträgerplatte 1 im Bereich der Belagträgerplattenunterseite 24 angeordnet ist. Benachbart zu dem Abstützelement 9 für die Federbasis ist das Sicherungselement 15 angeordnet, das mit einer Anlaufschräge 23 versehen ist, die von dem Abstützelement 9 weg weist. Über diese Anlaufschräge 23 kann die Federbasis eines einzulegenden Federelementes hinwegeschoben werden, sodass die Federbasis sicher zwischen dem Abstützelement 9 der Federbasis und dem Sicherungselement 15 positioniert werden kann. Durch das Sicherungselement 15 ist gewährleistet, dass ein eingelegtes Federelement nicht wieder in einfacher Weise aus der Aufnahmeeinrichtung 4 entnommen werden kann. Zudem kann das Abstützelement 9 für eine Federbasis aber auch noch mit einem hier nicht eingearbeiteten Hinterschnitt versehen sein.

Ferner sind in der Darstellung gemäß der Figur 4 die beiden Abstützelemente 10 und 11 auf der Rückseite 3 der Belagträgerplatte 1 deutlich erkennbar. Im vorliegenden Ausführungsbeispiel weisen die Abstützelemente 10 und 11 jeweils einen Hinterschnitt 13, 14 auf, in welchem die Federschenkel des Federelementes bei eingelegtem Federelement zum Liegen kommen. Durch die Hinterschnitte 13 und 14 ist gewährleistet, dass das Federelement im eingelegten Zustand in der Aufnahmeeinrichtung 4 im Zusammenwirken mit dem Sicherungselement 15 und dem Abstützelement 9 für die Federbasis unverlierbar gehalten ist. Abschließend ist in Figur 3 noch das bei dem hier gewählten Ausführungsbeispiel zylinderförmig ausgebildete gemeinsame Abstützelement 18 der Federschenkel des Federelementes dargestellt.

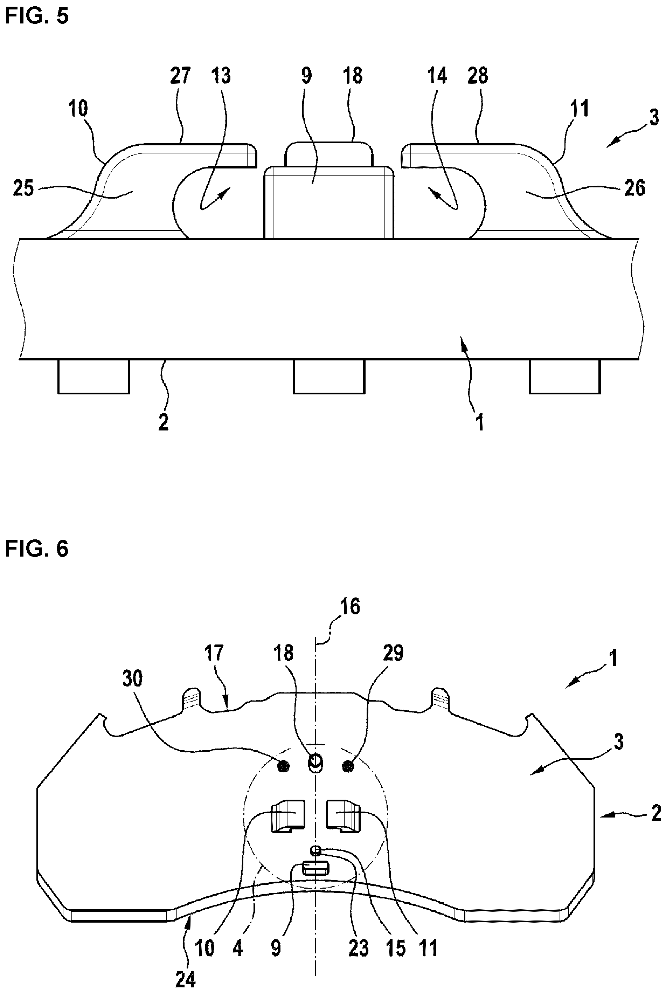

In der Figur 5 ist eine weitere Detaildarstellung der Aufnahmeeinrichtung 4 gezeigt, diesmal in einer Draufsicht auf die Belagträgerplattenunterseite 24 gezeigt. Hierbei ist nunmehr auch die Vorderseite 2 der Belagträgerplatte 1 erkennbar, auf welcher ein Reibbelag aufgebracht werden kann.

In der Darstellung gemäß Figur 5 sind die Hinterschnitte 13 und 14 der Abstützelemente 10 und 11 für die Federschenkel eines Federelementes deutlich erkennbar. Die Abstützelemente 10 und 11 sind dabei derart ausgebildet, dass sie einen im Wesentlichen senkrecht auf der Rückseite 3 der Belagträgerplatte 1 stehenden Steg 25, 26 aufweisen, an dem sich ein im Wesentlichen parallel zur Rückseite 3 der Belagträgerplatte 1 verlaufender Bereich 27, 28 anschließt. Die Hinterschnitte 13 und 14 sind dabei derart ausgestaltet, dass sie in ihrer Form an das Profil beziehungsweise den Querschnitt eines im Querschnitt runden Federschenkels des Federelementes angepasst sind. Derartige an die Form der Federschenkel angepasste Hinterschnitte resultieren in einer sehr guten Abstützwirkung der Abstützelemente 10 und 11 sowie in einer sicheren, unverlierbaren Anordnung des Federelementes innerhalb der Aufnahmeeinrichtung 4.

In den Figuren 2 und 3 ist nunmehr das Einführen eines Federelementes 5 in die Aufnahmeeinrichtung 4 der Belagträgerplatte 1 gezeigt. Das aus einem im Querschnitt runden Metallteil beziehungsweise Draht hergestellte Federelement 5 besteht dabei im Wesentlichen aus einer abgerundeten Federbasis 6, an die sich parallel verlaufende Bereiche von Federschenkeln 7 und 8 anschließen. An den offenen Enden 19, 20 der Schenkel 7 und 8 sind zudem Abstützbereiche 21 und 22 angeordnet, mit welchen das Federelement 5 beziehungsweise die Federschenkel im montierten Zustand beim Betrieb innerhalb einer Bremsanlage sich an dieser abstützen können, um somit die Federwirkung zu ermöglichen.

Wie aus Figur 2 ersichtlich, beginnt das Einlegen des Federelementes 5 damit, dass die Federbasis 6 zwischen dem gemeinsamen Abstützelement 18 und den jeweiligen Abstützelementen 10 und 11 der Federschenkel 7 und 8 positioniert wird, wobei die Federschenkel 7 und 8 gegenüberliegend dem gemeinsamen Abstützelement 18 positioniert sind.

Nachfolgend wird nunmehr das Federelement 5 in Richtung des Abstützelementes 9 für die Federbasis 6 verschoben. Dabei werden die Federschenkel 7 und 8 zwischen ihren jeweiligen Abstützelementen 10 und 11 positioniert. Zum verliersicheren Positionieren des Federelementes 5 innerhalb der Aufnahmeeinrichtung 4 wird nunmehr das Federelement 5 mit seiner Federbasis 6 über die Anlaufschräge 23 des Sicherungselementes 15 hinweggeschoben, bis die Federbasis 6 zwischen seinem Abstützelement 9 und dem Sicherungselement 15 zum Liegen kommt. Während des Verschiebens der Federbasis 6 auf der Anlaufschrägen 23 des Sicherungselementes 15 wird innerhalb des Federelementes 5 eine Spannung aufgebaut, die wieder abgebaut wird, wenn die Federbasis 6 über die Anlaufschräge 23 und das Sicherungselement 15 hinwegverschoben wurde. Dabei springt die Federbasis 6 in den Zwischenraum zwischen Sicherungselement 15 und Abstützelement 9 der Federbasis 6. Die Federbasis 6 ist somit nun sicher und unverlierbar in der Aufnahmeeinrichtung 4 für das Federelement 5 gehalten, da das Sicherungselement 15 ein Rückverschieben des Federelementes 5 verhindert, während die Hinterschnitte 13 und 14 der Abstützelemente 10 und 11 der Federschenkel 7 und 8 ein Herausschwenken des Federelementes 5 aus der Aufnahmeeinrichtung 4 unmöglich machen.

Im Betrieb innerhalb einer Bremsanlage kann sich das Federelement 5 mit seinen Federschenkeln 7 und 8 unter Belastung nunmehr an dem gemeinsamen Abstützelement 18 abstützen, wobei dadurch die Belagträgerplatte 1 in ihrer Position gehalten wird. Das Federelement 5 dient dabei als Niederhaltefeder für die Belagträgerplatte 1.

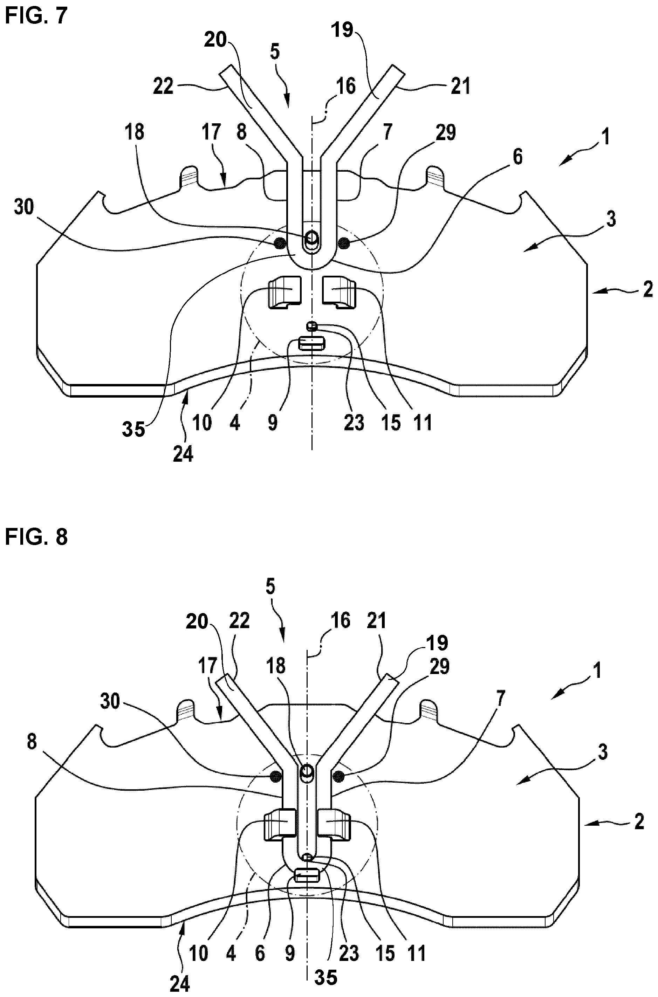

In den Figuren 6 bis 8 ist ein zweites Ausführungsbeispiel einer erfindungsgemäßen Belagträgerplatte 1 gezeigt, welches im Wesentlichen dem ersten Ausführungsbeispiel der Figuren 1 bis 6 entspricht. Im Unterschied zum ersten Ausführungsbeispiel ist allerdings für die Federschenkel 7 und 8 jeweils eine weiteres Abstützelement 29 beziehungsweise 30 vorgesehen, welches oberhalb des Abstütz- und Führungselementes 18 zwischen diesem und der Belagträgeroberseite 17 angeordnet ist. Im Gegensatz zu den Abstützelementen 10 und 11 der Federschenkel 7 und 8 wiesen die Abstützelemente 29 und 30 allerdings keine Hinterschnitte auf. Es sind allerdings auch weitere Ausführungsbeispiele denkbar, in welchen auch die Abstützelemente 29 und 30 mit Hinterschnitten versehen sind.

Im Ausführungsbeispiel der Figuren 6 bis 8 sind die Abstützelement 29 beziehungsweise 30 mit dem jeweils zugeordneten Abstützelement 10 beziehungsweise 11 der Federschenkel 7 und 8 im Wesentlichen fluchtend im Bezug zur Mittellängsachse 16 und spiegelsymmetrisch zur Mittellängsachse 16 ausgebildet. In weiteren Ausführungsbeispielen kann es auch vorgesehen sein, dass die Abstützelemente 29 und 30 bezüglich der Mittellängsachse 16 einen größeren oder kleineren Abstand aufweisen als die Abstützelement 10 und 11 und somit mit diesen nicht fluchten, allerdings immer noch eine Spiegelsymmetrie zur Mittellängsachse 16 aufweisen.

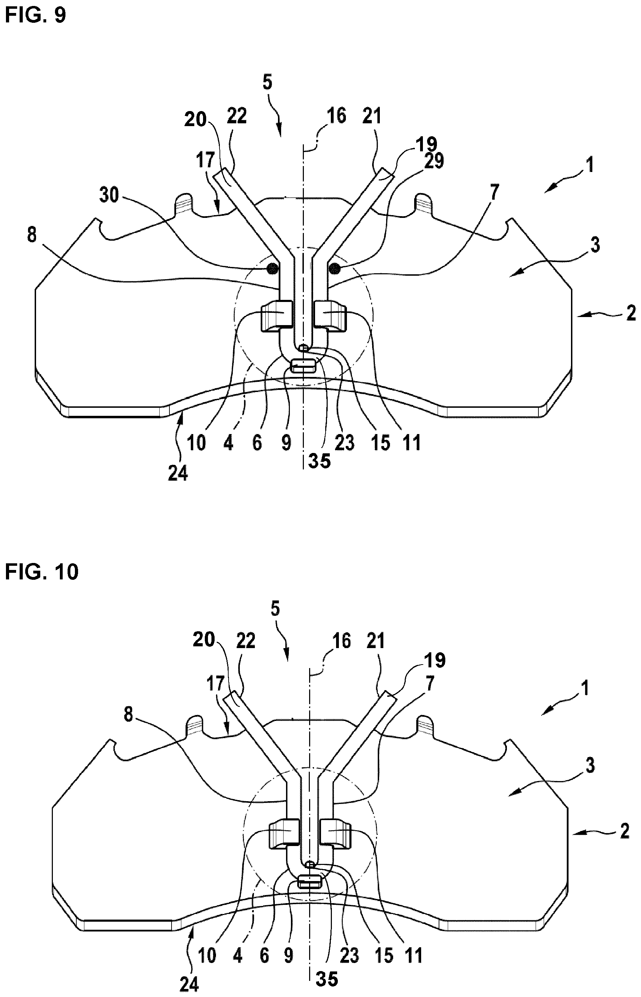

Figur 9 zeigt ein drittes Ausführungsbeispiel einer erfindungsgemäßen Belagträgerplatte 1 gezeigt, welches im Wesentlichen dem zweiten Ausführungsbeispiel der Figuren 6 bis 8 entspricht. Im Unterschied zum zweiten Ausführungsbeispiel ist allerdings kein Abstützelement 18 für die Federschenkel 7, 8 vorgesehen.

In Figur 10 ist ein viertes Ausführungsbeispiel der erfindungsgemäßen Belagträgerplatte 1 dargestellt, welche im Wesentlichen dem ersten Ausführungsbeispiel gemäß der Figuren 1 bis 5 entspricht, wobei aber ebenfalls kein Abstützelement 18 für die Federschenkel 7, 8 vorgesehen ist.

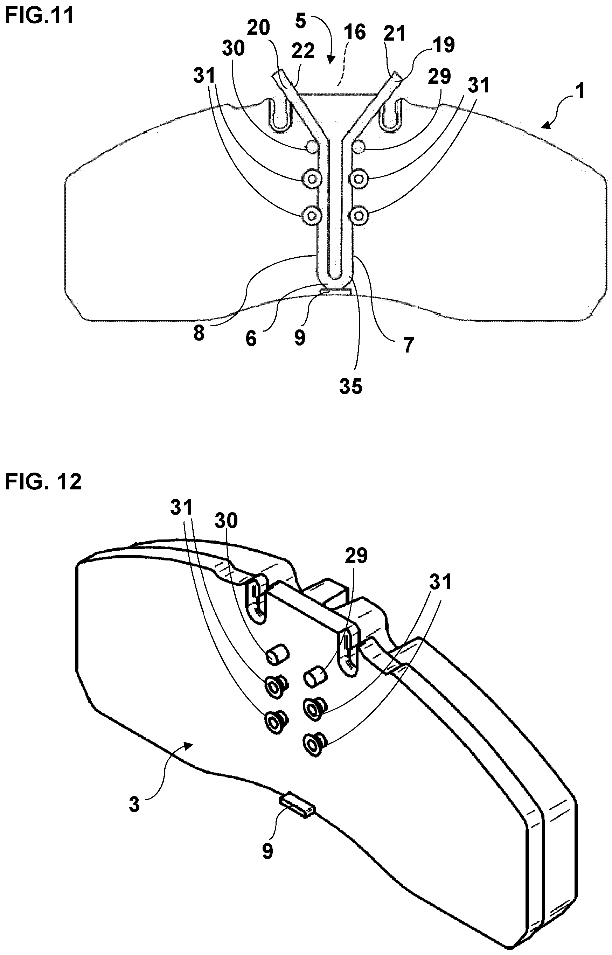

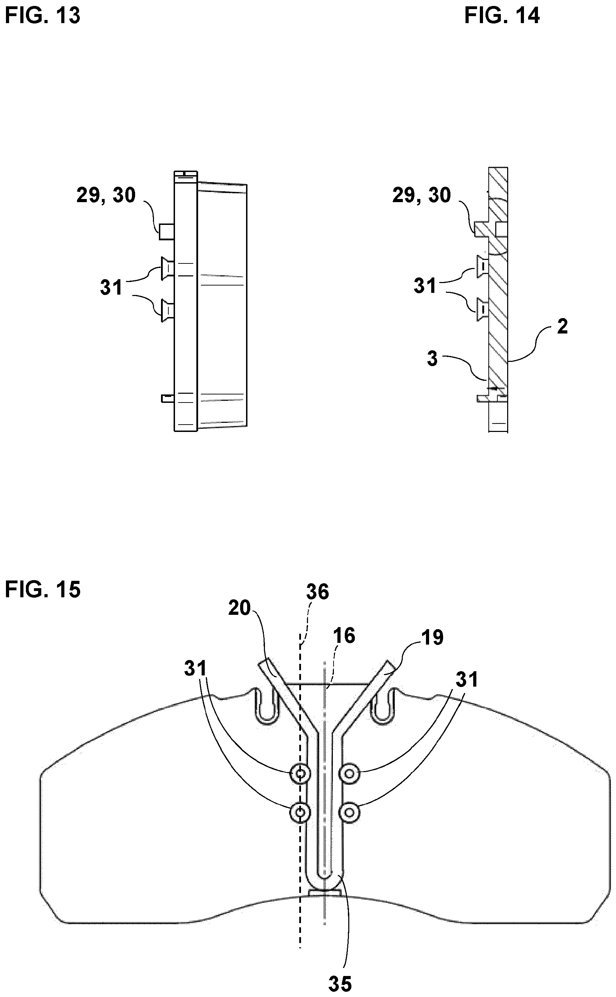

Gemäß der Figuren 11 bis 14 ist ein fünftes Ausführungsbeispiel der erfindungsgemäßen Belagträgerplatte 1 dargestellt, wobei die im Wesentlichen aus Stahl hergestellte Belagträgerplatte 1 im vorliegenden Beispiel eine Aufnahmeeinrichtung 4 mit vier, als Abstützelemente ausgebildeten noppenartigen Vorsprüngen 31 aufweist, welche auch als Noppen bezeichnet werden. Es ist natürlich auch eine andere Anzahl an Noppen 31 denkbar. Die Noppen 31 sind an der Rückseite 3 der Belagträgerplatte 1 vorgesehen. Die Federschenkel 7, 8 liegen zumindest bereichsweise an den Noppen 31 an. Wie aus den Figuren 11 bis 13 weiter hervorgeht, sind bei diesem Ausführungsbeispiel auch Abstützelemente 29 und 30 für die Federschenkel 7, 8 vorgesehen. In Figur 14 ist eine Schnittdarstellung durch die Mittellinie gemäß Fig. 11 gezeigt.

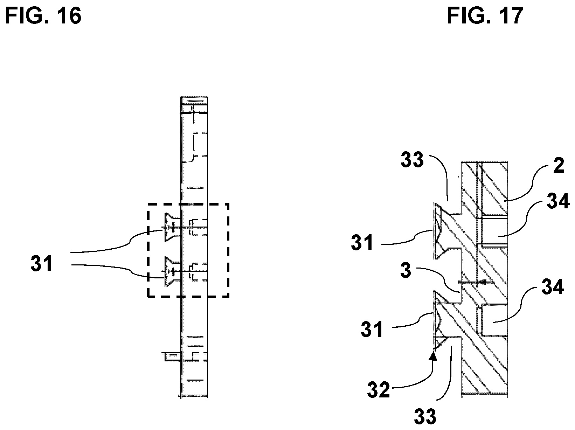

Das sechste Ausführungsbeispiel gemäß den Figuren 15 bis 17 unterscheidet sich gegenüber dem fünften Ausführungsbeispiel dadurch, dass die erfindungsgemäße Belagträgerplatte 1 keine seitlichen Abstützelemente 29 und 30 für die Federschenkel 7, 8 vorgesehen sind. Die im Wesentlichen aus Stahl hergestellte Belagträgerplatte 1 weist eine Mehrzahl, vorliegend vier, Noppen 31 auf, an welchen jeder Federschenkel 7, 8 zumindest bereichsweise anliegt. Die Figur 16 ist eine Schnittdarstellung gemäß der Schnittlinie 36 durch die Noppen 31 in Fig. 15 darstellt und in Figur 17 ist ein vergrößerter Ausschnitt der Darstellung gemäß Fig. 16 zu erkennen.

Wie insbesondere aus der vergrößerten Darstellung gemäß Figur 17 zu erkennen ist, sind die noppenartigen Vorsprünge 31 als Durchdrückungen gestaltet und daher einstückig mit der Trägerplatte 1.

Zur Herstellung der noppenartigen Vorsprünge bzw. Noppen 31 werden zunächst mehrere kreisförmige Noppen, beispielsweise mit einem Durchmesser von ca. 6 mm, mit einem Werkzeug mit konkav geformter Spitze von der Vorderseite 2 der Trägerplatte 1 her durchgedrückt, so dass eine Vielzahl von Noppen 31 von der Trägerplattenoberfläche auf der Rückseite 3 abstehen. Generell kann das Verhältnis von Noppendurchmesser zu Trägerplattenstärke zwischen 1 und 2, und zwar bevorzugt etwas über 1 betragen.

In einem zweiten Verfahrensschritt wird ein Werkzeug in Gegenrichtung gegen die vorstehenden Noppen 31 gedrückt, um in einem weiteren Umformvorgang die Noppen 31 aufzuspalten und Vorsprünge 32 mit Hinterschneidungen 33 aus den Noppen 31 zu bilden. Dabei kann ein Werkzeug mit pyramidenförmiger Spitze verwendet werden, die ein Aufspalten der Noppen 31 erleichtert. Es können auch Werkzeuge mit kegelförmiger Spitze verwendet werden, jedoch werden solche mit pyramidenförmiger Spitze bevorzugt.

Wie aus Figur 17 weiter ersichtlich ist, werden durch das Aufspalten der Vorsprünge 32 die kräftigen Hinterschneidungen 33 gebildet, mit denen der Reibbelag so auf der Trägerplatte 1 verankert werden kann, dass hohe Scherkräfte aufgenommen werden können. Auf der Vorderseite 2 der Trägerplatte 1 verbleiben kreisförmige Aussparungen 34, beispielsweise mit einer Tiefe von 2 bis 3 mm, deren Böden konvex gekrümmt sein können.

Beim Verpressen der Reibbeläge auf die Trägerplatte 1 kann das Reibmaterial des Reibbelages in die Hinterschneidungen 33 eindringen und sich dort fest verankern.

### Bezugszeichenliste

- 1: Belagträgerplatte
- 2: Vorderseite
- 3: Rückseite
- 4: Aufnahmeeinrichtung
- 5: Federelement
- 6: Federbasis
- 7: Federschenkel
- 8: Federschenkel
- 9: Abstützelement
- 10: Abstützelement
- 11: Abstützelement
- 13: Hinterschnitt
- 14: Hinterschnitt
- 15: Sicherungselement
- 16: Mittellängsachse
- 17: Belagträgerplattenoberseite
- 18: Abstütz- und Führungselement
- 19: Ende
- 20: Ende
- 21: Abstützbereich
- 22: Abstützbereich
- 23: Anlaufschräge
- 24: Belagträgerplattenunterseite
- 25: Steg
- 26: Steg
- 27: Bereich
- 28: Bereich
- 29: Abstützelement
- 30: Abstützelement
- 31: Noppenartige Vorsprünge
- 32: Vorsprünge
- 33: Hinterschneidungen
- 34: kreisförmige Aussparungen
- 35: U-förmiger Abschnitt
- 36: Schnittlinie

## Patentansprüche

1. Belagträgerplatte (1) für eine Scheibenbremse eines Kraftfahrzeugs mit wenigstens einem Federelement (5), wobei die Belagträgerplatte (1) eine Vorderseite (2) aufweist, welche zur Aufnahme eines Reibbelags ausgebildet ist, wobei sie eine Rückseite (3) aufweist, auf welcher eine Aufnahmeeinrichtung (4) angeordnet ist, welche zur Aufnahme des aus einer Federbasis (6) und zwei an den Enden der Federbasis (6) angeordneten Federschenkeln (7, 8) bestehenden Federelementes (5) ausgebildet ist, wobei die Aufnahmeeinrichtung (4) stoffschlüssig mit der Belagträgerplatte (1) ausgebildet ist, **dadurch gekennzeichnet, dass** die Aufnahmeeinrichtung (4) jeweils wenigstens ein Abstützelement (9, 10, 11, 29, 30, 31) für die Federbasis (6) und jeden der beiden Federschenkel (7, 8) aufweist, wobei wenigstens eines der Abstützelemente (9, 10, 11, 29, 30, 31) für die Federschenkel in Bezug zur Rückseite (3) der Belagträgerplatte (1) einen Hinterschnitt (13, 14, 33) zur Aufnahme eines Federschenkels (7, 8) des Federelementes (5) aufweist.

2. Belagträgerplatte nach Anspruch 1, **dadurch gekennzeichnet, dass** wenigstens eines der Abstützelemente (9, 10, 11, 29, 30, 31) in Bezug zur Rückseite (3) der Belagträgerplatte (1) einen Hinterschnitt (13, 14, 33) zur Aufnahme der Federbasis (6) des Federelementes (5) aufweist.

3. Belagträgerplatte nach Anspruch 1 oder 2, **dadurch gekennzeichnet, dass** die Aufnahmeeinrichtung (4) ein dem Abstützelement (9) für die Federbasis (6) zugeordnetes Sicherungselement (15) aufweist.

4. Belagträgerplatte nach einem der Ansprüche 1 bis 3, **dadurch gekennzeichnet, dass** die Aufnahmeeinrichtung (4) ein auf einer Mittellängsachse (16) zwischen einer Belagträgeroberseite (17) und den Abstützelementen (10, 11) der beiden Federschenkel (7, 8) angeordnetes, gemeinsames Abstütz- und Führungselement (18) für die beiden Federschenkel (7, 8) aufweist.

5. Belagträgerplatte nach einem der vorhergehenden Ansprüche, **dadurch gekennzeichnet, dass** sie als Metallgussteil, bevorzugt als Gusseisenteil ausgebildet ist.

6. Belagträgerplatte nach einem der vorhergehenden Ansprüche, **dadurch gekennzeichnet, dass** sie als Stahlplatte ausgebildet ist, wobei die Aufnahmeeinrichtung (4) durch ein Durchstellverfahren, insbesondere durch ein Stanzverfahren, ausgeformt ist.

7. Belagträgerplatte nach Anspruch 6, **dadurch gekennzeichnet, dass** die Aufnahmeeinrichtung (4) als Noppen (31) ausgebildete Abstützelemente zum Abstützen der Federschenkel (7, 8) und/oder der Federbasis (6) aufweist.

8. Belagträgerplatte nach einem der vorhergehenden Ansprüche, **dadurch gekennzeichnet, dass** das Federelement (5) als Drahtfeder ausgebildet ist.

9. Belagträgerplatte nach einem der Ansprüche 1 oder 2, **dadurch gekennzeichnet, dass** der Hinterschnitt (13, 14) in das Abstützelement (10, 11) gefräst ist.

10. Verfahren zur Herstellung einer Belagträgerplatte (1) mit wenigstens einem Federelement (5) nach einem der vorhergehenden Ansprüche 1 bis 9 mit folgenden Verfahrensschritten:
a. Bereitstellen einer wenigstens zweigeteilten Negativform einer Belagträgerplatte (1), die eine Negativform für die Aufnahmeeinrichtung (4) aufweist, welche zur Aufnahme des aus einer Federbasis (6) und zwei an den Enden der Federbasis (6) angeordneten Federschenkeln (7, 8) bestehenden Federelementes (5) ausgebildet ist, wobei die Aufnahmeeinrichtung (4) jeweils wenigstens ein Abstützelement (9, 10, 11, 29, 30, 31) für die Federbasis (6) und jeden der beiden Federschenkel (7, 8) aufweist,
b. Bereitstellen einer Metallschmelze,
c. Schließen der wenigstens zweigeteilten Negativform der Belagträgerplatte (1),
d. Befüllen der wenigstens zweigeteilten Negativform der Belagträgerplatte (1) mit der Schmelze,
e. zumindest Teilaushärten der Schmelze innerhalb der geschlossenen Negativform der Belagträgerplatte (1),
f. Öffnen der Negativform der Belagträgerplatte (1),
g. Entnahme der zumindest teilausgehärteten Belagträgerplatte (1),
wobei wenigstens eines der Abstützelemente (9, 10, 11, 29, 30) für die beiden Federschenkel (7, 8) mit einem Hinterschnitt (13, 14) versehen wird,
h. wobei das Federelement (5) in die Aufnahmeeinrichtung (4) eingebracht wird.

11. Verfahren nach Anspruch 10, **dadurch gekennzeichnet, dass** wenigstens eines der Abstützelemente (9, 10, 11, 29, 30) für die Federbasis (6) mit einem Hinterschnitt (13, 14) versehen wird.

12. Verfahren nach Anspruch 10 oder 11, **dadurch gekennzeichnet, dass** der Hinterschnitt (13, 14) durch Ausfräsen des wenigstens einen Abstützelements (9, 10, 11, 29, 30) erzeugt wird.

13. Verfahren nach einem der Ansprüche 10 bis 12, **dadurch gekennzeichnet, dass** das der Federbasis (6) zugeordnete Sicherungselement (15) und/oder das gemeinsame Abstützelement (18) für die beiden Federschenkel (7, 8) nachgearbeitet wird.

## Claims

1. Lining carrier plate (1) for a disc brake of a motor vehicle having at least one spring element (5), wherein the lining carrier plate (1) has a front side (2) which is designed for receiving a friction lining, wherein it has a rear side (3), on which a receiving device (4) is arranged, which is designed for receiving the spring element (5) comprising a spring base (6) and two spring legs (7, 8) arranged at the ends of the spring base (6), wherein the receiving device (4) is formed in an integrally joined manner with the lining carrier plate (1), **characterized in that** the receiving device (4) has in each case at least one support element (9, 10, 11, 29, 30, 31) for the spring base (6) and each of the two spring legs (7, 8), wherein at least one of the support elements (9, 10, 11, 29, 30, 31) for the spring legs has, in relation to the rear side (3) of the lining carrier plate (1), an undercut (13, 14, 33) for receiving a spring leg (7, 8) of the spring element (5).

2. Lining carrier plate according to Claim 1, **characterized in that** at least one of the support elements (9, 10, 11, 29, 30, 31) has, in relation to the rear side (3) of the lining carrier plate (1), an undercut (13, 14, 33) for receiving the spring base (6) of the spring element (5).

3. Lining carrier plate according to Claim 1 or 2, **characterized in that** the receiving device (4) has a securing element (15) assigned to the support element (9) for the spring base (6).

4. Lining carrier plate according to one of Claims 1 to 3, **characterized in that** the receiving device (4) has a common support and guide element (18) arranged on a central longitudinal axis (16), arranged between a lining carrier upper side (17) and the support elements (10, 11) of the two spring legs (7, 8), for the two spring legs (7, 8).

5. Lining carrier plate according to one of the preceding claims, **characterized in that** it is formed as a cast metal part, preferably as a cast iron part.

6. Lining carrier plate according to one of the preceding claims, **characterized in that** it is formed as a steel plate, wherein the receiving device (4) is formed by a bulging method, in particular by a stamping method.

7. Lining carrier plate according to Claim 6, **characterized in that** the receiving device (4) has support elements formed as nubs (31) for supporting the spring legs (7, 8) and/or the spring base (6).

8. Lining carrier plate according to one of the preceding claims, **characterized in that** the spring element (5) is formed as a wire spring.

9. Lining carrier plate according to either of Claims 1 and 2, **characterized in that** the undercut (13, 14) is milled into the support element (10, 11).

10. Method for producing a lining carrier plate (1) with at least one spring element (5) according to one of the preceding Claims 1 to 9, with the following method steps:
a. providing an at least two-part negative mould of a lining carrier plate (1), which has a negative mould for the receiving device (4) which is designed for receiving the spring element (5) comprising a spring base (6) and two spring legs (7, 8) arranged at the ends of the spring base (6), wherein the receiving device (4) has in each case at least one support element (9, 10, 11, 29, 30, 31) for the spring base (6) and each of the two spring legs (7, 8),
b. providing a molten metal,
c. closing the at least two-part negative mould of the lining carrier plate (1),
d. filling the at least two-part negative mould of the lining carrier plate (1) with the molten material,
e. at least partial hardening of the molten material within the closed negative mould of the lining carrier plate (1),
f. opening the negative mould of the lining carrier plate (1),
g. removing the at least partially hardened lining carrier plate (1),
wherein at least one of the support elements (9, 10, 11, 29, 30) for the two spring legs (7, 8) is provided with an undercut (13, 14),
h. wherein the spring element (5) is introduced into the receiving device (4).

11. Method according to Claim 10, **characterized in that** at least one of the support elements (9, 10, 11, 29, 30) for the spring base (6) is provided with an undercut (13, 14).

12. Method according to Claim 10 or 11, **characterized in that** the undercut (13, 14) is produced by the at least one support element (9, 10, 11, 29, 30) being milled out.

13. Method according to one of Claims 10 to 12, **characterized in that** the securing element (15) assigned to the spring base (6) and/or the common support element (18) for the two spring legs (7, 8) are/is reworked.

## Revendications

1. Plaque de support de garniture (1) pour un frein à disque d'un véhicule automobile, avec au moins un élément à ressort (5), la plaque de support de garniture (1) présentant un côté avant (2) qui est réalisé pour recevoir une garniture de friction, et un côté arrière (3) sur lequel est agencé un dispositif de réception (4) qui est configuré pour recevoir l'élément à ressort (5) constitué d'une base à ressort (6) et de deux branches à ressort (7, 8) agencées aux extrémités de la base à ressort (6), le dispositif de réception (4) étant réalisé par liaison de matière avec la plaque de support de garniture (1), **caractérisée en ce que** le dispositif de réception (4) présente respectivement au moins un élément de soutien (9, 10, 11, 29, 30, 31) pour la base à ressort (6) et chacune des deux branches à ressort (7, 8), au moins l'un des éléments de soutien (9, 10, 11, 29, 30, 31) pour les branches à ressort présentant, par rapport au côté arrière (3) de la plaque de support de garniture (1), une contre-dépouille (13, 14, 33) pour recevoir une branche à ressort (7, 8) de l'élément à ressort (5).

2. Plaque de support de garniture selon la revendication 1, **caractérisée en ce qu'**au moins l'un des éléments de soutien (9, 10, 11, 29, 30, 31) présente, par rapport au côté arrière (3) de la plaque de support de garniture (1), une contre-dépouille (13, 14, 33) pour recevoir la base à ressort (6) de l'élément à ressort (5).

3. Plaque de support de garniture selon la revendication 1 ou 2, **caractérisée en ce que** le dispositif de réception (4) présente un élément de fixation (15) associé à l'élément de soutien (9) pour la base à ressort (6).

4. Plaque de support de garniture selon l'une quelconque des revendications 1 à 3, **caractérisée en ce que** le dispositif de réception (4) présente un élément de soutien et de guidage commun (18) pour les deux branches à ressort (7, 8), agencé sur un axe longitudinal central (16) entre un côté supérieur de support de garniture (17) et les éléments de soutien (10, 11) des deux branches à ressort (7, 8).

5. Plaque de support de garniture selon l'une quelconque des revendications précédentes, **caractérisée en ce qu'**elle est réalisée sous forme de pièce métallique moulée, de préférence sous forme de pièce en fonte.

6. Plaque de support de garniture selon l'une quelconque des revendications précédentes, **caractérisée en ce qu'**elle est réalisée sous forme de plaque en acier, le dispositif de réception (4) étant formé par un procédé de perforation, notamment par un procédé d'estampage.

7. Plaque de support de garniture selon la revendication 6, **caractérisée en ce que** le dispositif de réception (4) présente des éléments de soutien réalisés sous forme de picots (31) pour soutenir les branches à ressort (7, 8) et/ou la base à ressort (6).

8. Plaque de support de garniture selon l'une quelconque des revendications précédentes, **caractérisée en ce que** l'élément à ressort (5) est sous forme de ressort en fil métallique.

9. Plaque de support de garniture selon l'une quelconque des revendications 1 ou 2, **caractérisée en ce que** la contre-dépouille (13, 14) est fraisée dans l'élément de soutien (10, 11).

10. Procédé de fabrication d'une plaque de support de garniture (1) avec au moins un élément à ressort (5) selon l'une quelconque des revendications 1 à 9 précédentes, avec les étapes de procédé suivantes :
a. la fourniture d'un moule négatif au moins divisé en deux parties d'une plaque de support de garniture (1), qui présente un moule négatif pour le dispositif de réception (4), lequel est réalisé pour recevoir l'élément à ressort (5) constitué d'une base à ressort (6) et de deux branches à ressort (7, 8) agencées aux extrémités de la base à ressort (6), le dispositif de réception (4) présentant respectivement au moins un élément de soutien (9, 10, 11, 29, 30, 31) pour la base à ressort (6) et chacune des deux branches à ressort (7, 8),
b. la fourniture d'une masse fondue de métal,
c. la fermeture du moule négatif au moins divisé en deux parties de la plaque de support de garniture (1),
d. le remplissage du moule négatif au moins divisé en deux parties de la plaque de support de garniture (1) avec la masse fondue,
e. le durcissement au moins partiel de la masse fondue à l'intérieur du moule négatif fermé de la plaque de support de garniture (1),
f. l'ouverture du moule négatif de la plaque de support de garniture (1),
g. le retrait de la plaque de support de garniture (1) au moins partiellement durcie,
au moins l'un des éléments de soutien (9, 10, 11, 29, 30) pour les deux branches à ressort (7, 8) étant pourvu d'une contre-dépouille (13, 14),
h. l'élément à ressort (5) étant inséré dans le dispositif de réception (4).

11. Procédé selon la revendication 10, **caractérisé en ce qu'**au moins l'un des éléments de soutien (9, 10, 11, 29, 30) pour la base à ressort (6) est pourvu d'une contre-dépouille (13, 14).

12. Procédé selon la revendication 10 ou 11, **caractérisé en ce que** la contre-dépouille (13, 14) est produite par fraisage de l'au moins un élément de soutien (9, 10, 11, 29, 30).

13. Procédé selon l'une quelconque des revendications 10 à 12, **caractérisé en ce que** l'élément de fixation (15) associé à la base à ressort (6) et/ou l'élément de soutien commun (18) pour les deux branches à ressort (7, 8) sont retravaillés.
